# EUROPÄISCHE PATENTSCHRIFT

(11) **EP 3 002 609 B1**
(45) Veröffentlichungstag und Bekanntmachung des Hinweises auf die Patenterteilung: **15.08.2018**
(21) Anmeldenummer: 15185242.3
(22) Anmeldetag: 15.09.2015
(51) Int. Cl.: G01S 17/08, G01S 17/48, G01S 7/481, G02B 3/08, G02B 19/00, G02B 27/10

(54) **OPTOELEKTRONISCHER SENSOR**
OPTOELECTRONIC SENSOR
CAPTEUR OPTOELECTRONIQUE

(30) Priorität: 01.10.2014 DE 102014114314
(43) Veröffentlichungstag der Anmeldung: 06.04.2016
(73) Patentinhaber: SICK AG, 79183 Waldkirch/Breisgau (DE)
(72) Erfinder: Buser, Roger, 79106 Freiburg (DE); Ostojic, Oliver, 79108 Freiburg (DE)
(74) Vertreter: Manitz Finsterwald Patentanwälte PartmbB

(56) Entgegenhaltungen:
- EP-A1- 1 624 322
- EP-A2- 0 924 535
- DE-A1-102005 007 945
- DE-A1-102005 043 418
- DE-U1-202013 102 370

## Beschreibung

Die Erfindung betrifft einen optoelektronischen Sensor mit einem Lichtsender zum Aussenden eines Lichtsignals durch eine Sendeoptik in eine Detektionszone, einem Lichtempfänger zum Empfangen von Licht aus der Detektionszone, das von einem zu detektierenden Objekt in der Detektionszone remittiert wird, und einer dem Lichtempfänger vorgeordneten Empfangslinse, die eine Hauptlinse umfasst, wobei die Sendeoptik und die Empfangslinse unterschiedliche optische Achsen haben. Die Erfindung betrifft weiterhin eine Linse zum Einsatz als Empfangslinse in einem solchen optoelektronischen Sensor.

Derartige optoelektronische Sensoren können zum Beispiel zur Entfernungsmessung ausgestaltet sein.

So können sie zum Beispiel als Triangulationstaster ausgebildet sein, bei denen Licht durch eine Sendelinse hindurch in eine Detektionszone gesendet wird. Ein eventuell in dieser Detektionszone befindliches Objekt remittiert dieses Licht. Das remittierte Licht wird von einer eine Apertur bildenden Empfangslinse in Richtung eines Empfängers abgebildet. Bei einem biaxialen Triangulationstaster sind Sendelinse und Empfangslinse nebeneinander angeordnet und definieren insofern unterschiedliche optische Achsen.

Das durch die Empfangslinse auf den Empfänger gerichtete, von dem Objekt remittierte Licht trifft in einer Position auf den Empfänger, die abhängig von der Entfernung des remittierenden Objektes von dem Triangulationstaster ist. Zwischen der Position des Lichtflecks auf dem Empfängerelement und der Entfernung des remittierenden Objekts besteht unter Berücksichtigung der optischen Eigenschaften der Empfangslinse ein eindeutiger Zusammenhang, so dass aus der Position des Lichtflecks auf die Entfernung des remittierenden Objekts geschlossen werden kann.

Problematisch bei der Detektion unter Einsatz des Prinzips der Triangulation kann es sein, dass eine Änderung der Entfernung des remittierenden Objekts im Fernbereich nur eine kleine Positionsänderung des Lichtflecks auf dem Lichtempfänger bewirkt, während die gleiche Entfernungsänderung im Nahbereich eine größere Positionsänderung des Lichtflecks auf dem Lichtempfänger bewirkt. Objekte, die sich noch näher beim Sensor befinden, werden nur teilweise oder gar nicht mehr auf dem Lichtempfänger abgebildet.

Andere als Entfernungsmesser eingesetzte optoelektronische Sensoren sind als so genannte Time-Of-Flight-Sensoren (TOF-Sensoren, Lichtlaufzeitsensoren) ausgebildet, die mit Hilfe einer entsprechenden Auswerteeinheit aus der Laufzeit eines Lichtpulses oder der Phasenverschiebung eines in die Detektionszone gesendeten und aus dieser zurückremittierten Lichtsignales durch Berücksichtigung der bekannten Lichtgeschwindigkeit die Entfernung des remittierenden Objektes in der Detektionszone berechnen. Bei einem biaxialen TOF-Sensor sind Sendeoptik und Empfangslinse nebeneinander angeordnet und definieren insofern unterschiedliche optische Achsen. Auch hier kann das Problem entstehen, dass Objekte, die sich sehr nahe am Sensor befinden, durch die Empfangslinse des Sensors nicht mehr oder nicht mehr vollständig auf den Lichtempfänger abgebildet werden.

Durch geeignete Ausgleichseinrichtungen muss daher sichergestellt werden, dass auch Licht aus dem Nahbereich, das ansonsten nicht auf den Lichtempfänger träfe, detektiert werden kann.

DE 102 20 037 C5 schlägt dazu am Beispiel eines Triangulationstasters vor, dass neben der Hauptempfangslinse eine weitere Empfangslinse vorgesehen ist, die derart ausgebildet ist, dass im empfängernahen Bereich reflektiertes Licht stärker zur Achse des Senders gebrochen wird, je näher sich das Objekt beim Sender bzw. Empfänger befindet. Dazu müssen zwei optische Komponenten im Empfangslinsensystem vorgesehen sein, wodurch ein erhöhter Herstellungsaufwand und Justierungsaufwand resultiert. Eine prinzipiell ähnliche Anordnung ist auch in US 6 133 988 A gezeigt. Ein Lichttaster, bei dem eine Hauptlinse und ein Korrekturelement zur Nahbereichskorrektur hintereinander im Strahlengang vorgesehen sind, ist in WO 92/05 455 A1 beschrieben.

Andere Lösungen des Standes der Technik schlagen vor, dass nicht zwei unterschiedliche optische Komponenten miteinander kombiniert werden, sondern dass eine einzelne Glaslinse derart gegossen oder gepresst wird, dass sie integral die Funktion erfüllt, dass auch Licht aus dem Nahbereich, das ohne diese zusätzliche Formung nicht auf den Lichtempfänger treffen würde, in Richtung des Lichtempfängers gebrochen wird. Eine Glaslinse entsprechend präzise zu formen bedarf jedoch einer aufwendigen und genauen Herstellungstechnik.

Grundsätzlich ist es auch möglich, die Empfangslinse vollständig aus Kunststoff, z.B. Polymer herzustellen, wodurch die Vorgabe einer entsprechenden Form einfacher ist als bei einer Glaslinse. Andererseits sind Polymerlinsen deutlich temperaturempfindlicher. Eine Änderung der Temperatur bewirkt hier eine unerwünschte Verschiebung des Brennpunkts, was zum Beispiel für eine genaue Entfernungsbestimmung nachteilig ist.

Aus US 2005/0 018 315 A1 ist ein Verfahren bekannt, eine hybride asphärische Linse durch Aufbringen einer asphärischen Polymerbeschichtung auf einer sphärischen Glaslinse herzustellen.

In DE 10 2008 014 912 A1 wird ein Saugroboter mit einem Triangulationssystem beschrieben, welches eine Empfängerlinse und eine asphärische Korrekturlinse umfasst.

EP 1 624 322 A1 beschreibt einen koaxialen optischen Sensor mit einer Sendeund Empfangsoptik, welche aus einer mit einer Beschichtung versehenen Linse besteht. Die Beschichtung ist in mehrere Zonen unterteilt, die eine asphärische Korrektur und Brennweitenkorrektur der Linse bewirken.

DE 10 2005 043 418 A1 offenbart ein biaxiales optoelektronisches Messgerät mit einer Empfangsoptik und einem rotationssymmetrisch zur Achse des Empfangslichtpfades ausgebildeten Nahbereichselement, welches einstückig und konzentrisch zur Empfangsoptik angeordnet ist.

Aufgabe der vorliegenden Erfindung ist es, einen optoelektronischen Sensor anzugeben, der zum einen eine präzise und einfache Herstellung der Empfangslinse ermöglicht, die andererseits möglichst wenig temperaturempfindlich ist und auch die Detektion von Objekten nahe dem optoelektronischen Sensor ermöglicht.

Diese Aufgabe wird mit einem optoelektronischen Sensor mit den Merkmalen des Anspruchs 1 gelöst.

Erfindungsgemäß ist vorgesehen, dass die Empfangslinse eine Hauptlinse umfasst. Außerdem umfasst die Empfangslinse des erfindungsgemäßen optoelektronischen Sensors eine Korrekturbeschichtung, die zumindest auf einer Oberfläche der Hauptlinse vorgesehen ist. Diese Korrekturbeschichtung ist derart ausgestaltet, dass die Hauptlinse zusammen mit der Korrekturbeschichtung zumindest in einem ersten Bereich der Empfangslinse eine asphärische Linsenform aufweist, die Aberrationen auskorrigiert. Gemäß diesem erfindungsgemäßen Merkmal ist es also bereits möglich, die gegebenenfalls durch die Hauptlinse auftretenden Aberrationen zu korrigieren. Nachdem es sich aber bei der Korrekturbeschichtung nur um eine Beschichtung handelt, ist der Temperatureinfluss dieser Beschichtung geringer.

In einem zweiten Bereich der Empfangslinse ist die Korrekturbeschichtung derart ausgebildet, dass Licht, das in diesem Bereich auf die Empfangslinse trifft, stärker in Richtung der optischen Achse des Lichtsendesystems gebrochen wird, je näher sich das remittierende Objekt in der Detektionszone an dem optoelektronischen Sensor befindet.

Dieser Bereich ist also derart ausgestaltet, dass Licht, das von einem Objekt remittiert wird, das sich sehr nahe an dem optoelektronischen Sensor, mehr in Richtung der optischen Achse des Lichtsendesystems (zum Beispiel gebildet aus der Lichtquelle und einer Sendeoptik oder der Lichtquelle und einer Sendeapertur) gebrochen wird, als es der Fall wäre, wenn ein solcher zweiter Bereich nicht an der Empfangslinse vorgesehen sein würde.

Mit der erfindungsgemäßen Ausgestaltung wird also zum einen erreicht, dass die Aberrationen verringert werden, und zum anderen wird erreicht, dass auch Licht, das von einem Objekt in einem räumlichen Bereich sehr nahe am optoelektronischen Sensor remittiert wird, noch detektiert werden kann. Dazu ist nur eine einzige Beschichtung notwendig.

Für die Zwecke des vorliegenden Textes soll der Begriff "Licht" sowohl sichtbares Licht, als auch andere elektromagnetische Strahlung, z.B. Infrarot oder Ultraviolett umfassen.

Bei dem erfindungsgemäßen optoelektronischen Sensor ist es möglich, dass die Empfangslinse den Anforderungen entsprechend optimal angepasst werden kann. So ist es z.B. möglich, die Korrekturbeschichtung aus einem Material zu machen, das sehr einfach und präzise formbar ist, z.B. durch eine Kunststoff-, insbesondere eine Polymerbeschichtung, die sehr leicht aufgebracht werden kann und in ihrer Form nahezu beliebig vorgegeben werden kann.

Die Hauptlinse der Empfangslinse besteht hingegen z.B. aus einem Material, das wenig temperaturempfindlich ist. So kann die Hauptlinse z.B. aus Glas bestehen. Dessen Temperaturempfindlichkeit ist gering, so dass die gesamte Empfangslinse, dessen Hauptbestandteil dann aus Glas ist, eine geringe Temperaturempfindlichkeit aufweist. Die Gesamtlinse kann dann in einem breiten Temperaturbereich eingesetzt werden.

Besonders vorteilhaft ist es, wenn die Hauptlinse zumindest eine sphärische Oberfläche hat. Diese kann präzise hergestellt und poliert werden. Die Korrekturbeschichtung kann dann im ersten Bereich insbesondere zur Korrektur der sphärischen Aberration ausgestaltet sein.

Die Korrekturbeschichtung kann z.B. aus einem leicht formbaren Material sein. Wenn dieses eine größere Temperaturempfindlichkeit aufweisen sollte, ist das von untergeordneter Bedeutung, weil der Hauptkörper der Empfangslinse, nämlich die Hauptlinse, aus einem weniger temperaturempfindlichen Material besteht.

Insofern ist es besonders vorteilhaft, wenn die Hauptlinse z.B. aus Glas und die Korrekturbeschichtung aus Polymer besteht.

Besonders vorteilhaft ist es, wenn der zweite Bereich der Empfangslinse, in dem die Korrekturbeschichtung zusammen mit der Hauptlinse ein verändertes Brechungsverhalten für Strahlung aus dem Nahbereich zur Verfügung stellt, in der Empfangslinse in deren lichtsendernahem Bereich vorgesehen ist. Auf diese Weise lassen sich durch die derart beschichtete Linse die Strahlen von einem Objekt nahe des Sensors besonders gut durch diesen zweiten Bereich erfassen.

Bei einer besonders vorteilhaften Weiterbildung sind der erste und der zweite Bereich z.B. in ihrer Größe derart gewählt, dass die Position und die Größe eines auf dem Lichtempfänger auftreffenden Lichtflecks von einem remittierenden Objekt im Nahbereich vor dem optoelektronischen Sensor von im zweiten Bereich gebrochenen Licht dominiert wird und die Position und die Größe eines auf dem Lichtempfänger auftreffenden Lichtflecks von einem remittierenden Objekt im Fernbereich vor dem optoelektronischen Sensor von Licht dominiert wird, das vom übrigen Teil der Empfangslinse gebrochen wird. Diese Ausführungsform stellt auf einfache Weise sicher, dass an dem Empfangselement bei einem remittierenden Objekt nahe des optoelektronischen Sensors auch hauptsächlich dasjenige Licht detektiert wird, das durch den zweiten Bereich der Empfangslinse hindurchgetreten ist. Bei einem remittierenden Objekt im Fernbereich hingegen wird hauptsächlich dasjenige Licht detektiert, das durch den übrigen Bereich der Empfangslinse hindurchgetreten ist.

Grundsätzlich kann die wie beschrieben aus Hauptlinse und Korrekturbeschichtung bestehende Empfangslinse bei unterschiedlichen optoelektronischen Sensoren eingesetzt werden, bei denen eine Detektion naher Objekte mit herkömmlichen Linsen in beschriebener Weise problematisch sein kann. Besonders vorteilhaft ist der Einsatz bei Entfernungsmessern, insbesondere Triangulationstastern und TOF-Sensoren, weil dort oftmals die genaue Abstandmessung auch im Nahbereich wünschenswert ist. Grundsätzlich kann ein solcher optoelektronischer Entfernungsmesser auch simultan nach beiden Prinzipien arbeiten.

Die Ausgestaltung der Empfangslinse kann insbesondere bei einem Triangulationstaster dabei unter Berücksichtigung der Geometrie und der sonstigen optischen Eigenschaften des optoelektronischen Sensors so gewählt werden, dass die auf diese Weise definierten Nah- und Fernbereiche einer gewünschten Aufteilung der Detektionszone entsprechen.

Auf einfache Weise lassen sich die gewünschten Eigenschaften der Korrekturbeschichtung mit Hilfe einer Freiformbeschichtung erreichen, die zur Bildung des ersten Bereiches und des zweiten Bereiches ausgeformt ist. Dazu wird die gewünschte Empfangslinsenoberfläche z.B. als zweidimensional parametrisierte Funktion dargestellt, insbesondere durch eine zweidimensional parametrisierte Funktion der Pfeil-Höhen (oder "sag"-Höhen). Diese Pfeil-Höhen dienen in an sich bekannter Weise zur Charakterisierung einer asphärischen Oberfläche (insbesondere entspricht die Pfeil-Höhe z(r) der z-Komponente (parallel zur optischen Achse) des Abstandes der Linsenoberfläche von ihrem Vertex in einem Abstand r senkrecht zur optischen Achse).

Besonders vorteilhaft wird die Korrekturbeschichtung, insbesondere wenn sie aus Kunststoff oder Polymer besteht, in einer Gussform hergestellt bzw. aufgebracht (zum Beispiel durch Einpressen und Aushärten), die in einem einzelnen Prozessschritt gefertigt wurde. Gerade wenn die Freiformbeschichtung durch eine zweidimensional parametrisierte Funktion der gewünschten Empfangslinsenoberfläche dargestellt ist, lässt sich eine solche Form leicht herstellen, wenn die entsprechenden Parameter z.B. in eine automatische Bearbeitungsmaschine eingegeben werden, die zur Herstellung der Gussform verwendet wird.

Die Erfindung betrifft weiterhin eine Linse, die als Empfangslinse in einem erfindungsgemäßen optoelektronischen Sensor eingesetzt wird, also insbesondere einen wie oben beschriebenen ersten und zweiten Bereich aufweist und eine Hauptlinse umfasst, auf die wie oben beschrieben eine Korrekturbeschichtung aufgebracht ist, die im ersten Bereich zur Ausbildung einer asphärischen Linsenform zur Korrektur von Aberrationen führt und in dem zweiten Bereich derart ausgestaltet ist, dass Licht, das in dem zweiten Bereich auf die Empfangslinse trifft, stärker in Richtung der optischen Achse des Lichtsendesystems gebrochen wird, je näher sich das remittierende Objekt in der Detektionszone an dem optoelektronischen Sensor befindet.

Die Erfindung wird im Folgenden anhand der beiliegenden Figuren näher erläutert. Dabei zeigen in schematischer Darstellung:
- Fig. 1: den grundsätzlichen Aufbau eines als Triangulationstaster ausgestalteten, erfindungsgemäßen optoelektronischen Sensors;
- Fig. 2a: die Empfangslinse eines erfindungsgemäßen optoelektronischen Sensors im seitlichen Querschnitt;
- Fig. 2b: die Empfangslinse eines erfindungsgemäßen optoelektronischen Sensors in einer Draufsicht;
- Fig. 2c: die Empfangslinse eines erfindungsgemäßen optoelektronischen Sensors in perspektivischer Darstellung;
- Fig. 3: Lichtfleckpositionen und Ausmaße von Lichtflecken auf einem Lichtempfänger bei einem Triangulationstaster mit sphärischer Empfangslinse;
- Fig. 4: Lichtfleckpositionen und Ausmaße von Lichtflecken auf dem Lichtempfänger nur unter Berücksichtigung des Nahfeldkorrekturbereiches;
- Fig. 5: ein Diagramm zur Erläuterung der Fig. 3 und 4, in dem die Position des Lichtflecks gegen die Tastweite aufgetragen ist;
- Fig. 6: den grundsätzlichen Aufbau eines als TOF-Sensor ausgestalteten, erfindungsgemäßen optoelektronischen Sensors; und
- Fig. 7: ein Diagramm zur Erläuterung des Aufbaus der Fig. 6, in dem die Lichtleistung am Empfänger gegen die Tastweite aufgetragen ist.

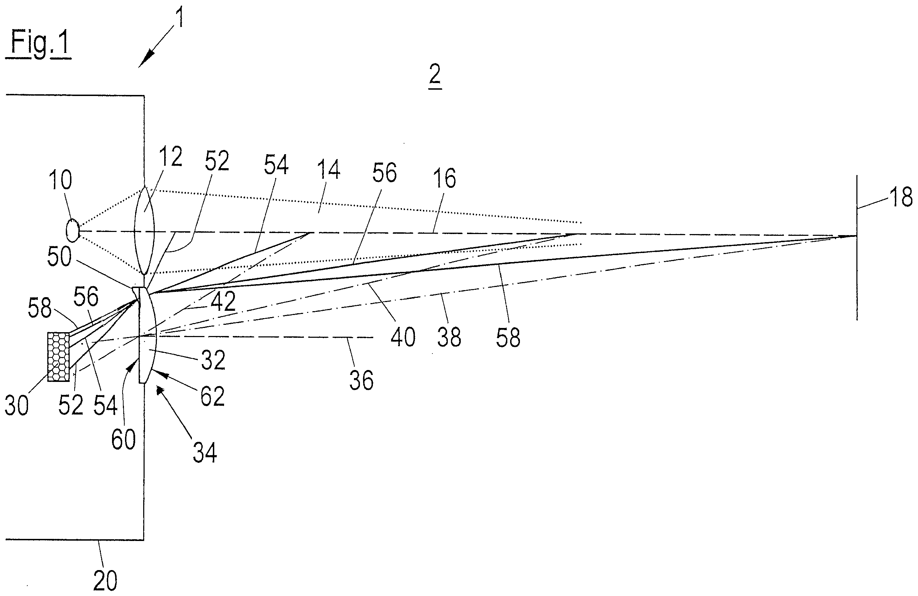

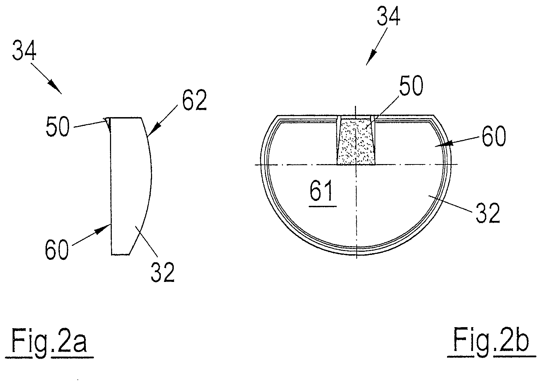

Fig. 1 zeigt den prinzipiellen Aufbau eines als Triangulationstaster ausgestalteten, erfindungsgemäßen optoelektronischen Sensors 1. Licht einer Sendelichtquelle 10, z.B. einer Laserdiode, wird durch eine Sendelinse 12 in den Detektionsraum 2 gesendet. Dieses gesendete Licht ist in Fig. 1 nur schematisch gezeigt (dargestellt durch punktierte Linien, die die Grenzen andeuten) und mit 14 bezeichnet. Das so gebildete Sendesystem hat eine optische Achse 16. Das Licht trifft auf ein Objekt 18 und wird von diesem remittiert. Die Position des Objektes 18 ist in Fig. 1 nur beispielhaft angedeutet und kann sich sowohl näher als auch weiter entfernt von dem Triangulationstaster befinden. Licht, das von dem Objekt 18 remittiert wird, wird von der Empfangslinse 34 aufgenommen, dessen Aufbau mit Bezug zu den Fig. 2a bis 2c näher erläutert werden wird. Von der Empfangslinse 34 wird das Licht in Richtung des Empfängers 30 abgelenkt. Die Empfangslinse 34 definiert eine optische Achse 36, die nicht notwendigerweise parallel zur optischen Achse 16 des Sendesystems sein muss, aber nicht mit dieser identisch ist. Der Empfänger 30 besteht bei dem Beispiel eines Triangulationstasters z.B. aus mehreren Fotodioden oder einem PSD (Position Sensitive Device).

Der Triangulationstaster 1 ist hier schematisch mit einem Gehäuse 20 dargestellt, das die entsprechenden Komponenten des Triangulationstasters einschließlich der gegebenenfalls vorhandenen und hier nicht dargestellten Auswerteelektronik umfasst.

Insbesondere Fig. 1 ist nicht maßstabsgetreu zu verstehen. So ist die Detektionszone 2 in der Regel sehr viel größer.

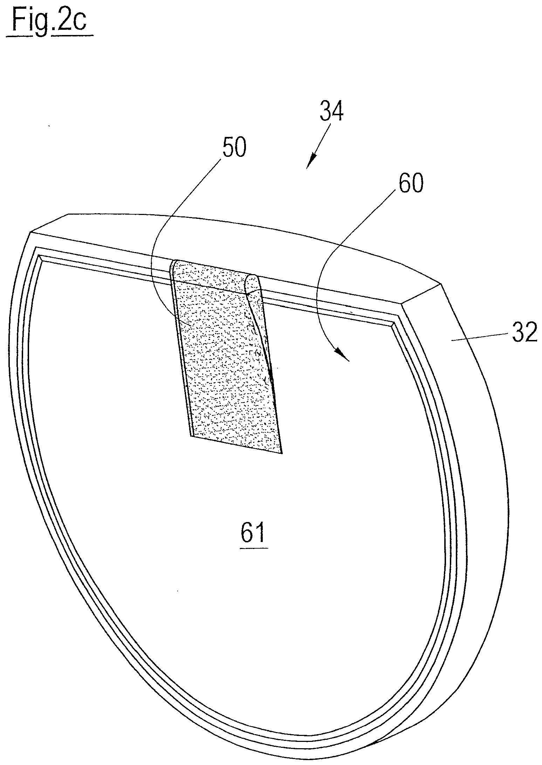

Die Empfangslinse 34 ist in den Fig. 2a bis 2c näher dargestellt. In der Schnittzeichnung der Fig. 2a sieht man die Hauptlinse 32 mit einer sphärischen Oberfläche 62. Die Hauptlinse 32 ist bei dieser Ausgestaltung aus Glas gefertigt. Sie kann insbesondere aufgrund der sphärischen Oberfläche 62 sehr gut und präzise hergestellt und poliert werden. Auf der anderen Seite der Linse 34 befindet sich eine Polymerbeschichtung 60, die in dem größten Teil der Linse (im Bereich 61, Fig. 2) zur Korrektur von Aberrationen, insbesondere den sphärischen Aberrationen, aufgebracht ist. Im in Fig. 2a oberen Bereich sieht man auf der linken Seite einen Bereich 50, in dem die Polymerbeschichtung stärker nach außen geformt ist, um sicherzustellen, dass Licht, das durch diesen Bereich 50 aus einem räumlichen Bereich sehr nahe an dem Triangulationstaster hindurchtritt, stärker in Richtung der optischen Achse 16 des Lichtsendesystems gebrochen wird. Diejenige Fläche der Hauptlinse 32, auf der die Beschichtung 60 aufgebracht ist, ist hier planar, kann aber auch eine andere Form haben.

Dieser Linsenbereich 50 ist in der Draufsicht der Fig. 2b (die einem Blick von links auf die Anordnung der Fig. 2a entspricht) deutlich zu erkennen. Die Polymerbeschichtung 60 bildet also im Teil mit der Bezugsziffer 61 eine Beschichtung zur Korrektur von Aberrationen und im Bereich 50 einen stärker nach außen geformten Bereich, der in der beschriebenen Weise das Brechungsverhalten verändert. Der Teil 61 entspricht also der gesamten Polymerbeschichtung mit Ausnahme des Bereichs 50.

Fig. 2c zeigt eine perspektivische Ansicht der Empfangslinse 34 von der Seite der Polymerbeschichtung 60 aus gesehen. Auch hier erkennt man den Bereich 50, in dem sich diese Polymerbeschichtung bei dieser Ausgestaltung desto weiter von der Oberfläche der Linse 32 weg erstreckt, je größer die radiale Entfernung zum Linsenmittelpunkt ist.

Die Form der Beschichtung im Bereich 50 ist dabei derart, dass sich die folgende Funktionsweise ergibt. Ein Teil des von dem Objekt 18 remittierten Lichtes tritt durch die Hauptlinse 32 hindurch, ohne durch den Bereich 50 hindurchzutreten. Die Mittelpunktstrahlen derartig remittierten Lichtes sind in Fig. 1 strichpunktiert dargestellt und mit den Bezugsziffern 38, 40 und 42 bezeichnet.

Ein anderer Teil des Lichtes, das von dem Objekt 18 remittiert wird, tritt durch den Bereich 50 der Empfangslinse 34 hindurch. Solches Licht ist beispielhaft durch die Mittelpunktstrahlen 52, 54, 56 und 58 dargestellt.

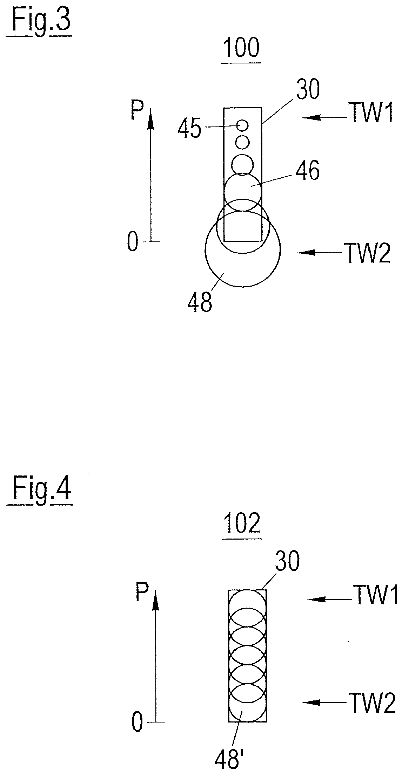

In Fig. 3 ist (nur schematisch) gezeigt, wie das Bild auf dem Empfänger 30 aussähe, wenn der Bereich 50 nicht berücksichtigt werden würde. Licht, das aus einer Tastweite TW1 (d.h. einer größeren Entfernung) aus der Detektionszone über die Empfangslinse 34 auf den Empfänger 30 trifft, wird durch einen kleinen und sehr scharfen Punkt 45 abgebildet. Je näher sich ein remittierendes Objekt am Triangulationstaster befindet, desto größer wird der Spot und wandert entlang des Empfangselements 30 in der Darstellung der Fig. 3 nach unten, bis er schließlich gar nicht mehr erfasst werden kann. Ein dazwischen liegender Lichtspot ist beispielhaft mit der Bezugsziffer 46 bezeichnet.

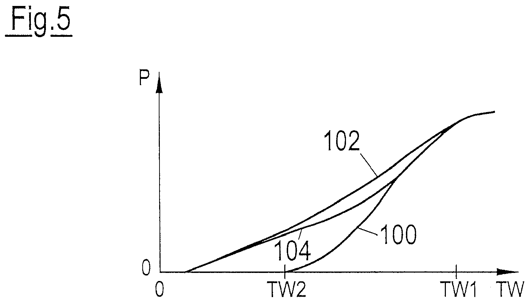

Man erkennt dieses Verhalten auch in der diagrammartigen Darstellung der Fig. 5. Hier ist die Position des Lichtflecks in Abhängigkeit der Tastweite TW (d.h. der Entfernung) eines remittierenden Objektes von dem Triangulationstaster gezeigt. Die Kurve 100 entspricht der Fig. 3. Man sieht hier, dass bereits bei einer Tastweite TW2 die Position P = 0 erreicht ist, die dem unteren Ende des Lichtempfängers 30 gemäß der Darstellung der Fig. 3 entspricht. Ein hier auftreffender Lichtfleck 48 kann also bereits nicht mehr vollständig erfasst werden.

Für den angenommenen Fall, dass nur der Linsenbereich 50 wirksam ist, würden Lichtstrahlen, die von triangulationstasternahen Objekten reflektiert werden (also z.B. Licht, das in Fig. 1 durch die Mittelpunktstrahlen 52 oder 54 dargestellt ist), stärker in Richtung zur optischen Achse des Sendesystems hin gebrochen. Man sieht in der dem entsprechenden Fig. 4, dass auch bei einer Tastweite TW2 der Lichtfleck 48' noch mehrheitlich von dem Lichtempfänger 30 erfasst werden kann. Dies ist auch in Fig. 5 in dem Diagramm erkennbar, bei dem sich die Position P des Lichtflecks gemäß der Kurve 102, die für diesen Fall gilt, auch bei der Tastweite TW2 noch im positiven Bereich befindet. Eine so scharfe Abbildung, wie es dem Punkt 45 der sphärischen Linse entspricht, ist mit dem Bereich 50 aber in der Regel nicht zu erwarten.

In Fig. 5 zeigt 104 die Kombination der beiden Kurven 100 und 102. Für Licht, das von einem Objekt 18 remittiert wird, das sich im Fernbereich befindet, ist der nicht dem Bereich 50 entsprechende Teil 61 der Hauptlinse 32 dominant, da dessen Empfangsfläche wesentlich größer ist als die des Bereiches 50. Für Licht aus dem mittleren Entfernungsbereich gelangt nicht mehr alles Licht auf den Empfänger 30, weil der Lichtfleck aufgrund der Unschärfe immer größer wird. Dadurch wird der Einfluss des Bereiches 50 immer stärker, bis der Lichtfleck, der von demjenigen Teil 61 der Linse 32 erzeugt wird, der nicht dem Bereich 50 entspricht, völlig von dem Empfänger 30 weggewandert ist. In diesem Bereich wird die Kurve 102 insofern immer dominanter. Durch die geeignete Formgebung und Auswahl der Größenverhältnisse der Linse 32 und des Bereiches 50 und der jeweiligen Beschichtungsdimensionen lassen sich so beliebige Übergangsfunktionen realisieren, die in Abhängigkeit der jeweiligen Anwendung ausgewählt werden können.

Bei dem erfindungsgemäßen Triangulationstaster ist also sichergestellt, dass remittiertes Licht auch dann auf den Lichtempfänger 30 trifft, wenn sich das remittierende Objekt sehr nahe an dem Triangulationstaster befindet.

Dieses vorteilhafte Verhalten der erfindungsgemäßen Empfangslinse 34 ist auch in Fig. 1 dargestellt.

Man erkennt insbesondere, dass das Licht 42 den Lichtempfänger 30 kaum mehr trifft, wenn nur die Hauptlinse 32 vorliegen würde. Demgegenüber wird das Licht 54, das von einem von dem Objekt in derselben Entfernung remittiert wird, durch den Bereich 50 gebrochen und trifft sicher auf dem Lichtempfänger 30 auf. Licht, das von einem Objekt noch näher an dem Triangulationstaster 1 remittiert wird und z.B. einem Mittelpunktstrahl 52 entspricht, würde durch die Hauptlinse 32 gar nicht mehr auf dem Empfänger 30 abgebildet werden. Durch den Bereich 50 der Empfangslinse 34 ist jedoch sichergestellt, dass auch das Licht 52 noch auf den Empfänger 30 trifft.

Zur Herstellung der Empfangslinse 34 wird zunächst die gewünschte Linsenform bestimmt. Dann wird eine Hauptlinse 32 aus Glas hergestellt, bei der sich insbesondere die sphärische Oberfläche 62 durch einen entsprechenden Poliervorgang sehr gut und präzise herstellen lässt.

Es wird eine Gussform hergestellt, die ein Negativ der gewünschten asphärischen Beschichtung 60 einschließlich der Beschichtung im Bereich 50 bildet. In dieser Gussform kann dann die Beschichtung auf die Linse 32 aufgebracht werden, wobei die Beschichtung aus Polymer besteht.

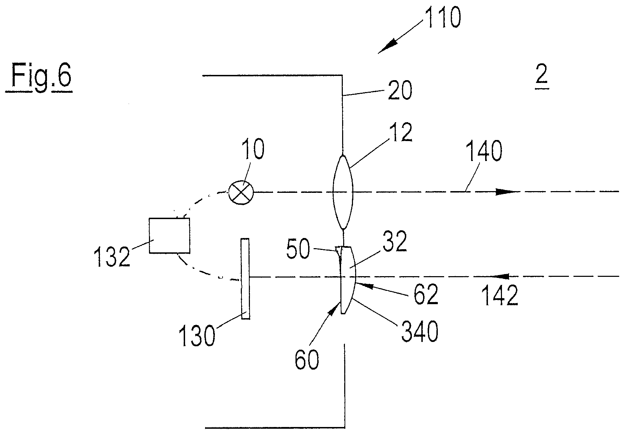

Fig. 6 zeigt eine Anordnung in schematischer Darstellung, die einem TOF-Sensor entspricht (TOF-Sensor = Time-Of-Flight-Sensor, Lichtlaufzeitsensor). Das Licht einer Sendelichtquelle 10, zum Beispiel einer Laserdiode, wird in an sich bekannter Weise durch eine Sendelinse 12 in den Detektionsraum 2 gesendet. In Fig. 6 ist dieses Licht mit der Bezugsziffer 140 schematisch dargestellt. Das remittierte Licht ist mit 142 bezeichnet.

Hier ist eine Anwendung gezeigt, in der das reflektierende Objekt relativ weit von dem TOF-Sensor 110 entfernt ist. Insofern erscheinen die hier dargestellten Lichtstrahlen 140 für das ausgesendete Licht und 142 für das an einem Objekt im Detektionsraum 2 in größerer Entfernung remittierte Licht im Wesentlichen parallel.

Befindet sich das remittierende Objekt näher am TOF-Sensor 110, besteht auch bei der Anordnung des TOF-Sensors die Gefahr, dass das remittierte Licht durch eine nicht-erfindungsgemäß ausgestaltete Empfängerlinse nicht mehr auf den Empfänger 130 abgebildet werden würde. Durch die erfindungsgemäße Ausgestaltung der Empfangslinse 340 mit dem Nahfeldkorrekturbereich 50 ist jedoch besser sichergestellt, dass auch Licht von Objekten, die sich nah am Sensor befinden, erfasst werden kann.

Auch bei dem TOF-Sensor 110 der Fig. 6 wird das remittierte Licht 142 durch die Empfangslinse 340, die aus Hauptlinse 32 und einer Beschichtung 60 mit einem Nahfeldkorrekturbereich 50 entspricht, zum Empfänger 130 gelenkt. Mit 62 ist auch in Fig. 6 die sphärische Oberfläche der Empfangslinse 340 bezeichnet.

Die Funktionsweise dieser Empfangslinse 340 entspricht der mit Bezug zu Fig. 1 bereits beschriebenen Funktionsweise der dortigen Empfangslinse 34. Es wird durch den Linsenaufbau auch hier sichergestellt, das Licht, das von Objekten 18 remittiert wird, die sich sehr nahe am TOF-Sensor 110 befinden, auch noch auf den Empfänger 130 trifft.

Der Lichtempfänger 130 ist bei dem TOF-Sensor 110 zum Beispiel eine einzelne Fotodiode mit einer Aufnahmefläche, die zum Beispiel größer als der zweifache Durchmesser eines erwarteten Lichtpunktes ist. In Fig. 6 ist mit 132 noch die Auswerteeinheit gezeigt, die das Aussenden der Lichtpulse durch den Lichtsensor 10 steuert und dazu ausgestaltet ist, die Lichtlaufzeit des ausgesendeten Lichtes 140 und des remittierten Lichtes 142 zu bestimmen. Dazu werden ihr die Signale des Lichtempfängers 130 zur Verfügung gestellt. Aus der Lichtlaufzeit kann dann mit der bekannten Lichtgeschwindigkeit auf die Entfernung des Objektes 18 zurückgeschlossen werden.

Die Funktionsweise der erfindungsgemäß ausgestalteten Empfangslinse 340 des TOF-Sensors der Fig. 6 entspricht der Funktionsweise der mit Bezug zu dem Triangulationstaster der Fig. 1 beschriebenen Funktionsweise der dortigen Empfangslinse 34. Auch der Aufbau der Empfangslinse 340 entspricht dem mit Bezug zu den Fig. 2a bis 2c beschriebenen Aufbau der Empfangslinse 34 des Triangulationstasters 1 der Fig. 1, so dass gleiche Elemente in Fig. 1 und Fig. 6 oftmals mit den gleichen Bezugsziffern bezeichnet sind.

Auch die Herstellung der Empfangslinse 34 entspricht der Herstellung, die mit Bezug zu der Empfangslinse des Triangulationstasters beschrieben wurde.

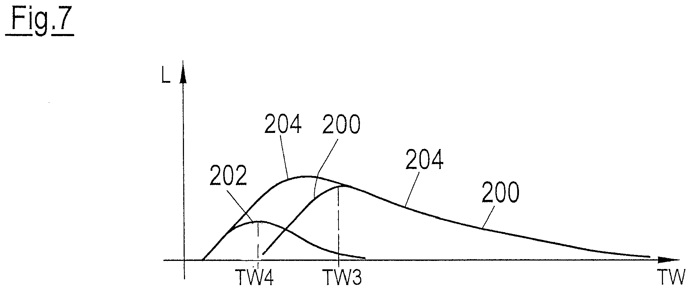

Zur Erläuterung des mit der erfindungsgemäß ausgestalteten Empfangslinse 340 ausgestalteten TOF-Sensors 110 dient Fig. 7, in der die Leistung L des auf den Empfänger 130 auftreffenden Lichtes gegen die Tastweite (d.h., die Entfernung des remittierenden Objektes im Detektionsraum 2) aufgetragen ist. Die Kurve 200 entspricht dabei der Leistung, wie sie vom Empfänger 130 gemessen werden würde, wenn die Empfangslinse 340 den erfindungsgemäß ausgestalteten Nahfeldbereich 50 nicht aufweisen würde. Bei größeren Tastweiten ist die Leistung aufgrund der größeren Entfernung des remittierenden Objektes gering. Sie steigt mit geringer werdender Tastweite. Ab einer Tastweite TW3 ist das Objekt so nah an dem TOF-Sensor 110, dass das remittierte Licht nicht mehr vollständig auf den Empfänger 130 abgebildet wird und der Lichtfleck aus dem Empfangsbereich des Empfängers 130 herauswandert. Die nachweisbare Lichtleistung sinkt dementsprechend mit kleiner werdender Tastweite wieder ab.

Kurve 202 zeigt den angenommenen Fall, dass nur der Linsenbereich 50 wirksam ist. Durch die zusätzliche Beschichtung im Bereich 50 verschiebt sich das Maximum der Kurve zu einer geringeren Tastweite TW4 der Kurve 202.

Die Kurve 204 stellt die Kombination der Kurven 200 und 202 dar. Für Tastweiten größer TW3 entspricht die Kurve 204 der Kurve 200. Für kleinere Tastweiten ist jedoch durch den Bereich 50 sichergestellt, dass auch hier noch eine ausreichende Leistung am Empfänger 130 ankommt.

### Bezuqszeichenliste

- 1: Triangulationstaster
- 2: Detektionszone
- 10: Lichtsender
- 12: Sendelinse
- 14: gesendetes Licht
- 16: optische Achse des Sendesystems
- 18: Objekt
- 20: Gehäuse
- 30: Lichtempfänger
- 32: Hauptlinse
- 34: Empfangslinse
- 36: optische Achse der Empfangslinse
- 38, 40, 42: Mittelpunktstrahlen
- 45, 46, 48, 48': Lichtfleck
- 50: Nahfeldkorrekturbereich der Empfangslinse
- 52, 54, 56, 58: Mittelpunktstrahlen durch den Nahfeldbereich
- 60: Beschichtung
- 61: Linsenteil mit asphärischer Beschichtung
- 62: sphärische Oberfläche
- 100, 102, 104: Diagrammdarstellung der Lichtfleckposition
- 110: TOF-Sensor
- 130: Lichtempfänger
- 132: Auswerteeinheit
- 140: ausgesendetes Licht
- 142: remittiertes Licht
- 200, 202, 204: Diagrammdarstellung der am Detektor nachgewiesenen Lichtleistung
- 340: Empfangslinse
- TW: Tastweite, Entfernung
- P: Lichtfleckposition
- L: Lichtleistung

## Patentansprüche

1. Optoelektronischer Sensor (1, 110), mit
- einem Lichtsender (10) zum Aussenden eines Lichtsignales (14, 140) durch eine Sendeoptik, insbesondere eine Sendelinse (12), in eine Detektionszone (2),
- einem Lichtempfänger (30, 130) zum Empfangen von Licht aus der Detektionszone (2), das von einem zu detektierenden Objekt (18) in der Detektionszone (2) remittiert wird, und
- einer dem Lichtempfänger (30, 130) vorgeordneten Empfangslinse (34, 340), die eine Hauptlinse (32) umfasst,
wobei die Sendeoptik (12) und die Empfangslinse (34, 340) unterschiedliche optische Achsen (16, 36) haben,
**gekennzeichnet durch**
eine Korrekturbeschichtung (60) auf zumindest einer Oberfläche der Hauptlinse (32),
(i) die derart ausgestaltet ist, dass die Hauptlinse (32) zusammen mit der Korrekturbeschichtung (60) zumindest in einem ersten Teilbereich (61) der Empfangslinse (34, 340) eine asphärische Linsenform zur Korrektur von Aberrationen bildet, und
(ii) in einem zweiten Teilbereich (50) der Empfangslinse (34) derart ausgebildet ist, dass Licht, das in diesem Bereich auf die Empfangslinse (34, 340) trifft, umso stärker in Richtung der optischen Achse (16) des Lichtsendesystems gebrochen wird, je näher sich das remittierende Objekt (18) an dem optoelektronischen Sensor (1, 110) befindet, und somit die Korrekturbeschichtung (60) in dem zweiten Teilbereich (50) derart ausgebildet ist, das Licht, das von einem Objekt (18) remittiert wird, dass sich sehr nahe an dem optoelektronischen Sensor (1, 110) befindet, mehr in Richtung der optischen Achse (16) des Lichtsendesystems gebrochen wird, als es der Fall wäre, wenn eine derart ausgebildete Korrekturbeschichtung (60) in dem zweiten Teilbereich (50) nicht vorgesehen sein würde.

2. Optoelektronischer Sensor nach Anspruch 1, **dadurch gekennzeichnet, dass** er ein Entfernungsmesser (1, 110) ist.

3. Optoelektronischer Sensor nach Anspruch 2, **dadurch gekennzeichnet, dass** er ein Triangulationstaster (1) ist.

4. Optoelektronischer Sensor nach einem der Ansprüche 2 oder 3, **dadurch gekennzeichnet, dass** er ein TOF-Sensor (110) ist.

5. Optoelektronischer Sensor nach einem der Ansprüche 1 bis 4, **dadurch gekennzeichnet, dass** sich der zweite Teilbereich (50) im lichtsendernahen Teil der Empfangslinse (34, 340) befindet.

6. Optoelektronischer Sensor nach einem der Ansprüche 1 bis 5, **dadurch gekennzeichnet, dass** die Korrekturbeschichtung (60) derart ausgebildet ist, dass
(i) die Position und die Größe eines auf den Lichtempfänger (30, 130) auftreffenden Lichtflecks von einem remittierenden Objekt (18) im Nahbereich vor dem optoelektronischen Sensor (1, 110) von durch den zweiten Teilbereich (50) hindurchtretendem Licht dominiert wird und
(ii) die Position und die Größe eines auf den Lichtempfänger (30, 130) auftreffenden Lichtflecks (46) von einem remittierenden Objekt (18) im Fernbereich vor dem optoelektronischen Sensor (1, 110) von Licht dominiert wird, das durch den ersten Teilbereich (61) hindurchtritt.

7. Optoelektronischer Sensor nach einem der Ansprüche 1 bis 6, **dadurch gekennzeichnet, dass** die Hauptlinse (32) zumindest eine sphärische Oberfläche (62) hat.

8. Optoelektronischer Sensor nach einem der Ansprüche 1 bis 7, **dadurch gekennzeichnet, dass** die Hauptlinse (32) aus Glas besteht.

9. Optoelektronischer Sensor nach einem der Ansprüche 1 bis 8, **dadurch gekennzeichnet, dass** die Beschichtung (60) eine Polymerbeschichtung umfasst.

10. Optoelektronischer Sensor nach einem der Ansprüche 1 bis 9, **dadurch gekennzeichnet, dass** die Beschichtung (60) eine Freiformbeschichtung umfasst, die zur Bildung des ersten Teilbereiches (61) und des zweiten Teilbereiches (50) ausgeformt ist und als eine zweidimensional parametrisierte Funktion der Empfangslinsenoberfläche, insbesondere durch eine zweidimensional parametrisierte Funktion der Pfeil-Höhen, dargestellt ist.

11. Optoelektronischer Sensor nach einem der Ansprüche 1 bis 10, **dadurch gekennzeichnet, dass** die Beschichtung (60) in einer Gussform hergestellt wird, die vorzugsweise in einem einzigen Prozess hergestellt ist.

## Claims

1. An optoelectronic sensor (1, 110) comprising
- a light transmitter (10) for transmitting a light signal (14, 140) through a transmission optics, which is in particular a transmission lens (12), into a detection zone (2);
- a light receiver (30, 130) for receiving light from the detection zone (2) which is remitted by an object (18) to be detected in the detection zone (2); and
- a reception lens (34, 340) which is arranged upstream of the light receiver (30, 130) and which comprises a main lens (32),
wherein the transmission optics (12) and the reception lens (34, 340) have different optical axes (16, 36),
**characterized by**
a correction coating (60) at at least one surface of the main lens (32)
(i) which is designed such that the main lens (32), together with the correction coating (60), forms an aspherical lens shape for the correction of aberrations at least in a first part region (61) of the reception lens (34, 340); and
(ii) which is designed in a second part region (50) of the reception lens (34) in such a manner that light which is incident onto the reception lens (34, 340) in this region is refracted more greatly in the direction of the optical axis (16) of the light transmission system the closer the remitting object (18) is located to the optoelectronic sensor (1, 110) and the correction coating (60) in the second part region (50) is thus formed in such a manner that light which is remitted by an object (18) which is located very close to the optoelectronic sensor (1, 110) is refracted more in the direction of the optical axis (16) of the light transmission system than would have been the case if a correction coating (60) formed in such a manner were not provided in the second part region (50).

2. An optoelectronic sensor in accordance with claim 1, **characterized in that** it is a range finder (1, 110).

3. An optoelectronic sensor in accordance with claim 2, **characterized in that** it is a triangulation sensor (1).

4. An optoelectronic sensor in accordance with one of the claims 2 or 3, **characterized in that** it is a TOF sensor (110).

5. An optoelectronic sensor in accordance with any one of the claims 1 to 4, **characterized in that** the second part region (50) is located in the part of the reception lens (34, 340) close to the light transmitter.

6. An optoelectronic sensor in accordance with any one of the claims 1 to 5, **characterized in that** the correction coating (60) is formed in such a manner that
(i) the position and the size of a light spot, incident onto the light receiver (30, 130), from a remitting object (18) in the near zone in front of the optoelectronic sensor (1, 110) are dominated by light passing through the second part region (50); and
(ii) the position and the size of a light spot (46), incident onto the light receiver (30, 130), from a remitting object (18) in the far zone in front of the optoelectronic sensor (1, 110) are dominated by light passing through the first part region (61).

7. An optoelectronic sensor in accordance with any one of the claims 1 to 6, **characterized in that** the main lens (32) has at least one spherical surface (62).

8. An optoelectronic sensor in accordance with any one of the claims 1 to 7, **characterized in that** the main lens (32) comprises glass.

9. An optoelectronic sensor in accordance with any one of the claims 1 to 8, **characterized in that** the coating (60) comprises a polymer coating.

10. An optoelectronic sensor in accordance with any one of the claims 1 to 9, **characterized in that** the coating (60) comprises a freeform coating which is formed to form the first part region (61) and the second part region (50) and which is represented as a two-dimensionally parameterized function of the reception lens surface, in particular by a two-dimensionally parameterized function of the sag heights.

11. An optoelectronic sensor in accordance with any one of the claims 1 to 10, **characterized in that** the coating (60) is manufactured in a casting mold which is preferably manufactured in a single process.

## Revendications

1. Capteur optoélectronique (1, 110), comportant
- un émetteur de lumière (10) pour émettre un signal lumineux (14, 140) par une optique d'émission, en particulier par une lentille d'émission (12), dans une zone de détection (2),
- un récepteur de lumière (30, 130) pour recevoir la lumière depuis la zone de détection (2), qui est réémise par un objet à détecter (18) dans la zone de détection (2), et
- une lentille de réception (34, 340) agencée en amont du récepteur de lumière (30, 130) et comprenant une lentille principale (32),
dans lequel
l'optique d'émission (12) et la lentille de réception (34, 340) présentent différents axes optiques (16, 36),
**caractérisé par**
un revêtement de correction (60) sur au moins une surface de la lentille principale (32),
(i) qui est conçu de telle sorte que la lentille principale (32) forme conjointement avec le revêtement de correction (60) une forme de lentille asphérique pour la correction d'aberrations au moins dans une première zone partielle (61) de la lentille de réception (34, 340), et
(ii) qui est réalisé, dans une seconde zone partielle (50) de la lentille de réception (34), de telle sorte que la lumière tombant dans cette zone sur la lentille de réception (34, 340) est réfractée dans la direction de l'axe optique (16) du système d'émission de lumière d'autant plus fortement que l'objet réémettant (18) se trouve près du capteur optoélectronique (1, 110), et donc le revêtement de correction (60) est réalisé, dans la seconde zone partielle (50), de telle sorte que la lumière qui est réémise par un objet (18) situé très près du capteur optoélectronique (1, 110) est réfractée plus en direction de l'axe optique (16) du système d'émission de lumière que ceci ne serait le cas si un revêtement de correction (60) ainsi réalisé ne se présentait pas dans la seconde zone partielle (50).

2. Capteur optoélectronique selon la revendication 1,
**caractérisé en ce que**
il est un télémètre (1, 110).

3. Capteur optoélectronique selon la revendication 2,
**caractérisé en ce que**
il est un détecteur de triangulation (1).

4. Capteur optoélectronique selon l'une des revendications 2 ou 3,
**caractérisé en ce que**
il est un capteur TOF (temps de vol) (110).

5. Capteur optoélectronique selon l'une des revendications 1 à 4,
**caractérisé en ce que**
la seconde zone partielle (50) se trouve dans la partie de la lentille de réception (34, 340) située près de l'émetteur de lumière.

6. Capteur optoélectronique selon l'une des revendications 1 à 5,
**caractérisé en ce que**
le revêtement de correction (60) est réalisé de telle sorte que
(i) la position et la taille d'une tache de lumière tombant sur le récepteur de lumière (30, 130) depuis un objet réémettant (18) dans la zone proche en avant du capteur optoélectronique (1, 110) sont dominées par la lumière traversant la seconde zone partielle (50), et
(ii) la position et la taille d'une tache de lumière (46) tombant sur le récepteur de lumière (30, 130) depuis un objet réémettant (18) dans la zone lointaine en avant du capteur optoélectronique (1, 110) sont dominées par la lumière traversant la première zone partielle (61).

7. Capteur optoélectronique selon l'une des revendications 1 à 6,
**caractérisé en ce que**
la lentille principale (32) présente au moins une surface sphérique (62).

8. Capteur optoélectronique selon l'une des revendications 1 à 7,
**caractérisé en ce que**
la lentille principale (32) est constituée en verre.

9. Capteur optoélectronique selon l'une des revendications 1 à 8,
**caractérisé en ce que**
le revêtement (60) comprend un revêtement en polymère.

10. Capteur optoélectronique selon l'une des revendications 1 à 9,
**caractérisé en ce que**
le revêtement (60) comprend un revêtement de forme libre qui est conformé pour constituer la première zone partielle (61) et la seconde zone partielle (50) et qui est représenté comme une fonction paramétrée bidimensionnellement de la surface de la lentille de réception, en particulier par une fonction paramétrée bidimensionnellement des hauteurs de flèche.

11. Capteur optoélectronique selon l'une des revendications 1 à 10,
**caractérisé en ce que**
le revêtement (60) est réalisé dans un moule qui est fabriqué de préférence en un seul processus.
